# EUROPEAN PATENT SPECIFICATION

(11) **EP 2 083 350 B1**
(45) Date of publication and mention of the grant of the patent: **06.08.2014**
(21) Application number: 09000857.4
(22) Date of filing: 22.01.2009
(51) Int. Cl.: G06F 3/048

(54) **Radial control menu, graphical user interface, method of controlling variables, and computer readable medium for performing the method**
Radialsteuerungsmenü, grafische Nutzerschnittstelle, Verfahren zur Variablensteuerung und computerlesbares Medium zur Durchführung des Verfahrens
Menu de commande radial, interface d'utilisateur graphique, procédé de commande de variables, et support lisible sur ordinateur pour effectuer le procédé

(30) Priority: 21.04.2008 US 106688
(43) Date of publication of application: 29.07.2009
(73) Proprietor: Wacom Co., Ltd., Saitama, 349-1148 (JP)
(72) Inventor: Fleck, Dave C., Saitama, 349-1148 (JP); Straub, Ben, Saitama, 349-1148 (JP); Norton, V. Thane III, Saitama, 349-1148 (JP)
(74) Representative: Appelt, Christian W.

(56) References cited:
- EP-A1- 0 533 424
- WO-A1-2006/056243
- US-A- 5 995 079

## Description

### FIELD OF THE INVENTION

The present invention relates to a radial control menu and graphical user interface for presenting the radial control menu. The present invention also relates to a method of controlling variables using a radial control menu and a computer readable medium for performing the same.

### BACKGROUND OF THE INVENTION

Various graphical user interfaces for interaction between an application and an input device have been designed and implemented according to Fitt's Law. Fitt's Law states that the further away the target is from the current position of the input device, or the smaller the target is, the more difficult the target is to select. The more difficult the target is to select, the higher the likelihood of missing the target.

In a Graphical User Interface (GUI) there are a number of different controls, sometimes called widgets, available for initiating actions and changing settings. These include buttons for performing actions, sliders, checkboxes, and radio buttons for changing settings, and pop-up or pull-down menus for actions or settings. For example, a menu might be used to indicate that a file should be saved, pressing a button could cancel a pending request, or checking a checkbox could change the boldness of text.

Because the central area of a display screen is typically used to display working documents, the controls used to change settings are typically positioned at the edge of the screen. For example, in a drawing application, menus for file and view operations are usually located at the top, and controls for color and tool selection are typically at the left or right edge of the screen. Although this placement avoids obscuring the image or document being manipulated, this makes these controls relatively inconvenient, resulting in longer times to access them. This is particularly true given that displays are becoming increasingly larger, thereby positioning the menus even further from the center of the display.

Attempts have been made to improve setting and menu selection methods. Radial selection techniques have been used in graphical user interfaces. The earliest form of a radial selection technique is a pie menu. Pie menus can be textual, iconic, or a combination of both. In some implementations, only the text is shown with no background or borders. Clicking in a pie segment makes a selection of an item. The number of choices can be extended through a hierarchy, where a second level menu is displayed at the location where the first menu item was chosen.

However, the format of the conventional pie menu has significant limitations. Specifically, the format of the conventional pie menu does not lend itself to setting and updating variables. Because setting or updating variables typically may involve steps that cannot be performed using conventional pie menus, other methods may be required to set and update variable values, for example, by visiting the menubar and selecting the appropriate option from a drop down menu to display a dialog for setting and/or updating the variables. Menubars, however, are typically positioned at the top or bottom of the screen, thus requiring the user to move the input device and cursor all the way across the screen to make a selection or adjustment.

In applications that require variables to be changed or updated constantly, accessing a menubar to either select a menu or change the variables is time consuming and inefficient. For example, when working in a graphics design application creating visual components of different visual characteristics, a designer needs to be able to readily access and change variables, such as color, brightness, opacity, etc.

Another form of conventional radial menu is a crossing menu. When a crossing method is used, the user is only required to cross into a sector or wedge of the menu, instead of crossing and selecting. A specific type of crossing menu is a flow menu. In the flow menu, the user makes a selection in the middle of the menu, then moves the cursor into a desired menu item, then back into the middle of the flow menu. The flow menu can be used to allow the user to make a series of selections in various levels of a hierarchy. For example, once a first selection is made in a first level of the menu, a second level of the menu can then be displayed for the user to make a second selection. The second level can be displayed once the user returns the cursor to the middle of the flow menu. Because the different levels of the hierarchy are not displayed until the cursor has returned to the middle of the flow menu, the flow menu remains displayed in the same position on the screen, thereby preventing subsequent levels from gradually moving the flow menu toward the edge of the screen. However, flow menus are frequently difficult for new users to learn how to use. Additionally, flow menus do not allow for continuous values to be selected, because the selections must be made by selecting particular menu items in the flow menu. "Marking menus" are similar to flow menus, and thereby suffer from the same drawbacks as flow menus.

Another control type, called a "slider", is used to set continuous variables. A slider control has an elongated track with a sliding element that can be moved along the track to set the value of a variable. The sliding element can be moved along the track based on movement of the cursor until the user makes a selection input to inform the slider control menu that the current value is to be selected based on the position of the sliding element. The sliding element can then be readjusted until it is dismissed. However, the slider control menu uses screen space inefficiently. For example, when there is more than one sliding element, the sliding elements are spaced across the screen so that any content displayed on the screen is not viewable. Additionally, a user must typically access another menu in order to invoke the slider control menu. This is time consuming and requires the user to know exactly how to find the slider control menu in the GUI. An example of a slider control menu is the volume control slider in the Apple® Macintosh® operating system.

Slider controls may also be included in tool palettes. However, tool palettes are often hidden and must be displayed by menu commands or keystroke combinations, and are usually located at the edge of the screen to avoid obscuring the document being worked on. Moving to the screen edge to access the sliders is time consuming. Examples of sliders in tool palettes are the sliders in Adobe Photoshop palettes.

A disadvantage of the above methods is that these selection techniques focus on menus that are relatively inflexible to allow controlling settings and choosing actions. One such control setting is the ability to represent state within a radial segment. Another is to allow continuous selections, as opposed to a discrete selection.

Accordingly, there is a need for an improved pie menu having more flexibility and applicability to various applications with numerous continuous value variables and/or state variables.

WO 2006/056243 A1 discloses a display method which includes displaying a menu having several group-wise arranged menu items, determining whether the user has selected one of the menu items by moving a cursor and, if so, determining any subsequent stroke of the cursor in a defined direction with respect to the center of the menu.

EP 0 533 424 A1 discloses a multiple action icon which can be used in front-of-screen applications for selecting a plurality of actions to be performed. The actions are selected by positioning the cursor within the icon, wherein the icon can be a dartboard. The radial position of the cursor represents a first action to be performed and the angular position of the cursor represents a second action to be performed.

US 5,995,079 discloses a method for controlling a variable of a dialogue box including an interface which receives user input representative of movements of a mouse pointer relative to a datum point, wherein the movement is determined to be either in a first sense or an opposite second sense relative to the datum point. A variable increments, when the movement is in the first sense and responsively decrements when the movement is in the second opposite sense.

### Summary of the invention

The present invention provides a computer system according to claim 1 and a method of controlling and/or displaying a value of at least one variable according to claim 8.

The present invention also provides a computer readable medium according to claim 13. Preferred embodiments are defined in the dependent claims.

### BRIEF DESCRIPTION OF THE DRAWINGS

Figure 1A is a diagram illustrating a prior art pie menu, Figure 1B shows an exemplary slider control menu, and Figure 1C shows an exemplary slider control.;
Figure 2 is a diagram illustrating a radial control menu according to an embodiment of the present invention;
Figures 3A to 3D illustrate a wedge of a radial control menu according to different embodiments of the present invention;
Figure 4 is a dimensional diagram illustrating a wedge of a radial control menu according an embodiment of the present invention;
Figures 5A to 5D are user interface diagrams illustrating exemplary arrangements for radial control menus according to embodiments of the present invention;
Figures 6A to 6C are diagrams illustrating various exemplary arrangements for radial control menus according to alternative embodiments of the present invention;
Figures 7A to 7D are flow chart diagrams showing radial control menu selection methods according to various embodiments of the present invention;
Figure 8 is a flow chart diagram illustrating a method of controlling variables using a radial control menu according to another embodiment of the present invention;
Figure 9 is a block diagram illustrating a system for implementing a radial control menu according to yet another embodiment of the present invention; and
Figure 10 is a perspective view of a digitizer tablet according to another embodiment of the present invention.

### DETAILED DESCRIPTION OF THE INVENTION

Reference will now be made in detail to the embodiments and methods of the invention as illustrated in the accompanying drawings, in which like reference characters designate like or corresponding parts throughout the drawings. It should be noted, however, that the invention in its broader aspects is not limited to the specific details, representative devices and methods, and illustrative examples shown and described in this section in connection with the preferred embodiments and methods. The invention according to its various aspects is particularly pointed out and distinctly claimed in the attached claims read in view of this specification.

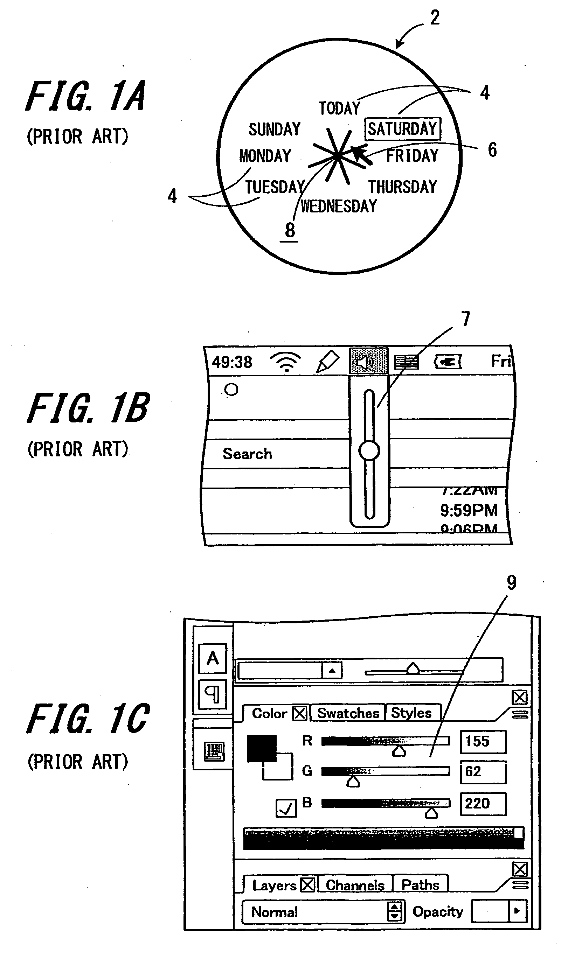

As best shown in Figure 1A, a prior art pie menu 2 includes several different menu items 4 from which a user can select using an input device (not shown) that moves a cursor 6. The pie menu 2 is advantageous, because the information is organized such that the items 4 are arranged around a central origin 8 of the menu 2. The pie menu 2 can be activated in a central region of a display (not shown), that is, close to where the cursor 6 is located. As a result, a user need not move to the edge of the display (not shown) in order to make a selection.

As best shown in Figures 1B and 1C, slider control menus 7 and 9 allow a user to set values of a variable within a predetermined range. However, the slider control menus 7 and 9 are often hidden and must be displayed by menu commands or keystroke combinations, and are usually located at the edge of the screen to avoid obscuring the document or image being worked on. Thus, the slider control menus 7 and 9 are relatively difficult to access.

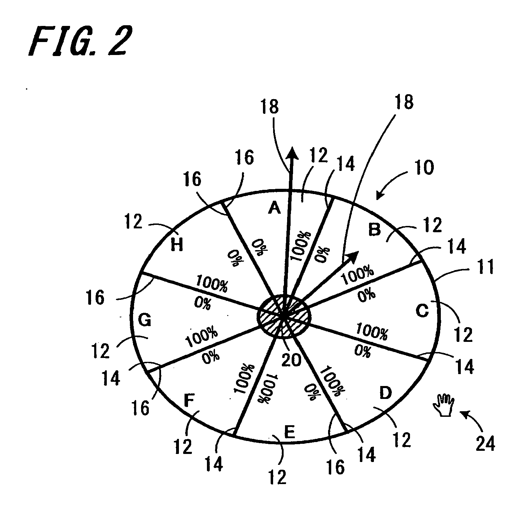

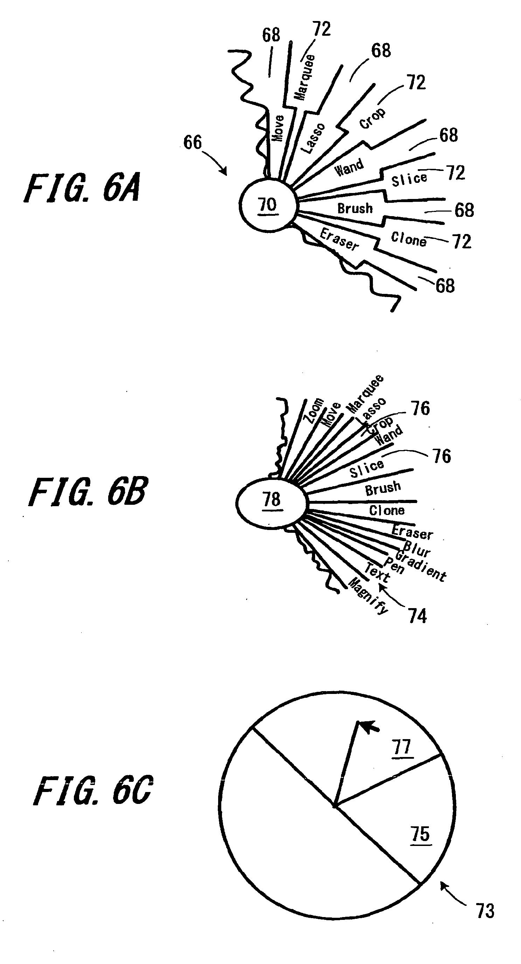

As best shown in Figure 2, a radial control menu 10 according to an embodiment of the present invention includes a plurality of wedges 12. Each wedge 12 is defined by a maximum boundary 14 and a minimum boundary 16 representing maximum and minimum values, respectively, between which the value of a corresponding variable can be set. For example, if wedge A represents a brightness variable, the value of the brightness variable can be set between 100% represented by the maximum boundary 14 and 0% represented by the minimum boundary 16. Movable indicators 18 are disposed in each wedge 12 to provide visual feedback to a user of where the corresponding variable is set between the maximum value and the minimum value. As shown in Figure 2, each movable indicator 18 can be a radial line extending from an origin 20 of the radial control menu 10 into the respective wedge 12. The movable indicators 18 are angularly displaceable around the origin 20 of the radial control menu 10. The origin 20 of the radial control menu 10 may be selected to deactivate the radial control menu 10, for example, when the user changes his or her mind about setting/updating the variable. Each of the wedges 12 preferably subtends a uniform angular amount, so that each is the same size. However this is not a requirement, as there are times such, as when mixing a single variable item with several fixed items, it may be desirable to make the fixed items smaller to allow for more items, while making the variable item larger to allow for easier selection of a value. This arrangement is best shown in Figure 6C, which is described below.

It should be understood that although the maximum and minimum boundaries 14 and 16, respectively, are shown in Figure 2 to be represented by a percentage value, other types of values may alternatively be used. For example, the maximum and minimum values may be shown as a range of integers.

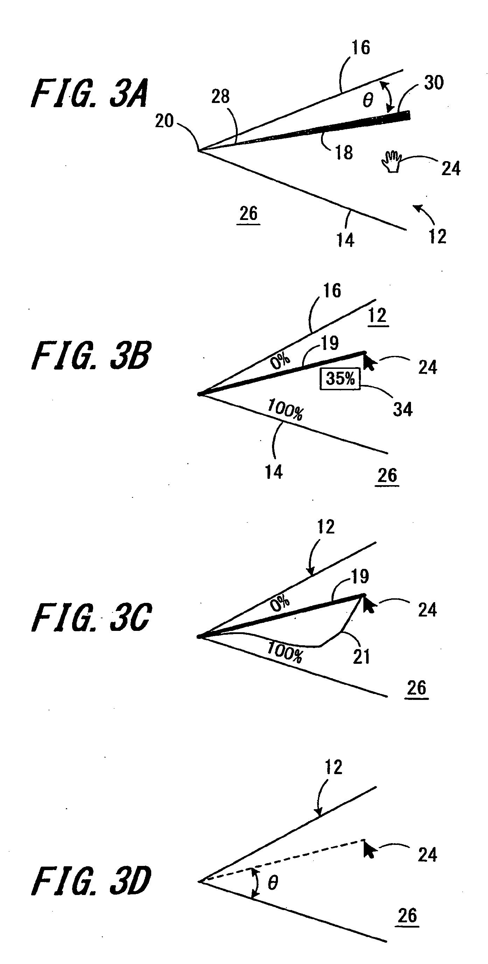

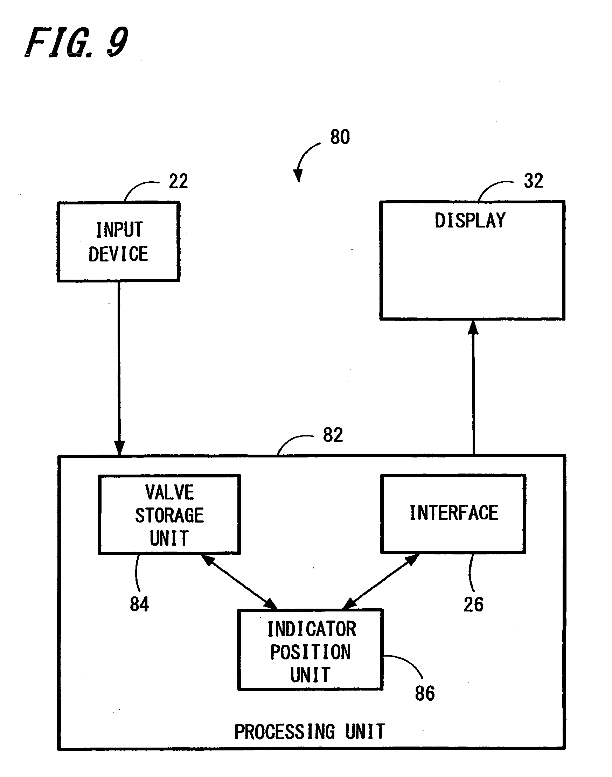

As best shown in Figure 3A, the movable indicator 18 in the wedge 12 is angularly displaceable to adjust the value of the corresponding variable continuously. A user can use an input device 22 (see Figure 9) to select the movable indicator 18 and move the indicator 18 angularly about origin 20. The input device 22 may be a mouse, keyboard, stylus, pointing device, or the like. For example, if the input device 22 is a mouse, the movable indicator 18 may be selected by clicking the mouse and then holding and dragging the movable indicator 18 to its desired location. The mouse button may then be released to set the movable indicator 18 and set the corresponding variable to its new value.

In most graphical user interfaces, a movable cursor 24, such as an arrow, a bracket, or a hand symbol, is used to provide a user visual feedback as to the position of the input device 22 (see Figure 9) with respect to a graphical user interface 26. The cursor may also be referred to herein and in the Figures as a "pointer" or a "position indicator." Thus, the user can select the movable indicator 18 using the cursor 24.

As one of ordinary skill in the art will appreciate, the graphical user interface 26 refers to software or a computer program running on a processing unit 82 (see Figure 9) which allows a user to interact with a display 32 (see Figure 9) using the input device 22 (see Figure 9). The graphical user interface 26 may be specifically designed for a particular application, or may be a standard operating system graphical user interface, such as the interface provided by Microsoft Windows. The input device 22 may be a digitizer tablet, graphics tablet, or pen tablet device associated with a stylus or pointer, such as manufactured by Wacom Co., Ltd.

The movable indicator 18 has a first end 28 and a second end 30 opposite the first end 28. The movable indicator 18 can be angularly displaced by either the first end 28, the second end 30, or any point in between ends 28 and 30. Due to the differences in the amount of movement required of the input device 22 (see Figure 9) to effect the same amount of angular displacement of the movable indicator 18 using the first end 28 versus the second end 30, a user can vary the amount of movement and/or precision with which the position of the movable indicator 18 is positioned. Thus, a user that desires to minimize the amount of movement of the input device 22 can move the movable indicator 18 close to the first end 28. On the other hand, a user that desires to be more precise in the placement of the movable indicator 18 can use the second end 30. This advantage is readily appreciated, for example, when a large screen or monitor is used as a display 32 (see Figure 9). As best shown in Figure 3A, the second end 30 of the movable indicator 18 may be wider than the first end 28 to make it easier to select.

It will be appreciated that the selectable movable indicator 18 is an exemplary and is not intended to limit the scope of the invention. One of ordinary skill will appreciate that the movable indicator 18 need not be selectable, but instead can be a visual indicator that is moved automatically based on the position of the cursor 24, as described below.

As best shown in Figure 3B, a line indicator 19, for example, a "rubber band" line extends from an origin (not shown in Figure 3B) to the current location of the cursor 24 within the wedge 12. The end of the line indicator 19 coincides with the location of the cursor 24 so that movement of the cursor 24 changes the angular position of the line indicator 19 and/or the length of the line indicator 19. For example, when the cursor 24 is moved toward the origin, the length of the line indicator 19 is shortened. Similarly, when the cursor 24 is moved away from the origin, the length of the line indicator 19 is increased. When the cursor 24 is moved angularly about the origin, the line indicator 19 is moved angularly about the origin. The angular movement and the change in length of the line indicator 19 may occur simultaneously. Accordingly, the line indicator 19 provides the user with visual feedback about the amount of angular movement of the cursor 24. The user can extend the line indicator 19 further from the origin when the user requires more precise value adjustment of the variable. Alternatively, the user can move the line indicator 19 toward the origin so that less movement is required to change the angular position and the value of the variable.

As best shown in Figure 3B, a current value indicator 34 may be shown within the wedge 12 to allow the user to ascertain the current value of the corresponding variable as a function of the current angular position of the line indicator 19 (or cursor 24) between the maximum and minimum boundaries 14 and 16. The current value indicator 34 need not be in the wedge 12, but may be located outside the wedge. Additionally, the current value indicator 34 may remain hidden until the line indicator 19 is first moved or until the cursor 24 is first moved into the wedge 12. In this case, the current value indicator 34 may be activated and displayed when the graphical user interface 26 first determines that the input device 22 (see Figure 9) has moved the cursor 24 into the wedge 12. To make this determination, the graphical user interface 26 accesses a current position of the boundaries 14 and 16 of the wedge 12 and compares this current position to a position of the cursor 24 on the display 32 (see Figure 9). If the position of the cursor 24 is between the boundaries 14 and 16 of the wedge 12, the graphical user interface 26 displays the current value indicator 34. In this manner, the current value indicator 34 will not distract the user's attention from the different wedges 12 of the radial control menu 10 until the user has already indicated an intention to adjust the variable associated with a particular wedge 12 and the current value indicator 34.

Although not shown in Figure 3A, if the current value indicator 34 is used in the wedge 12 of Figure 3A, the current value indicator 34 may be activated and displayed when the graphical user interface 26 first determines that the input device 22 (see Figure 9) has selected the movable indicator 18 for movement. To make this determination, the graphical user interface 26 accesses a current position of the movable indicator 18 from storage and compares this current position to a position of the cursor 24 on the display 32 (see Figure 9). If the position of the cursor 24 and the movable indicator 18 match and the input device 22 determines that the user has pressed a selection button, the graphical user interface 26 determines that the movable indicator 18 has been selected for movement and the current value indicator 34 is displayed. It should be understood that the current value indicator 34 best shown in Figure 3B can be applied to any of the radial menus described herein in the manner described above.

As best shown in Figure 3C, the wedge 12 includes both the line indicator 19 described above and a path tracing element 21. In the embodiment shown in Figure 3C, the value of the variable that corresponds to the wedge 12 may be set based on the angular position of the line indicator 19 or the angular position of the cursor 24. The path tracing element 21 continuously traces the path along which the cursor 24 is moved in the graphical user interface 26. The path tracing element 21 shows the history of movement of the cursor 24 even when the cursor 24 moves between different wedges in the radial menu or outside the radial menu.

As best shown in Figure 3D, the value of the variable corresponding to the wedge 12 is determined by the angular position of the cursor 24. In this embodiment, there may be no other position indicating components in the wedge 12, although a current value indicator (not shown in Figure 3D), may be used.

Thus, as compared with the embodiments of Figures 2 and 3A, the embodiments of Figures 3B, 3C, and 3D do not require a user to select and drag the movable indicator 18 (see Figures 2 and 3A), but instead the user can select a value by simply moving the cursor 24 to the target location and selecting the target location.

By comparison, in another type of radial control menu (not shown) that uses a movable indicator which determines the value of the corresponding variable based on the radial distance away from an origin of the menu, a user is required to move the indicator far from the origin in order to set the variable to greater values. This is less efficient than using angular position/displacement to set the variable value. With regard to the embodiments illustrated in Figures 2 and 3A to 3D, because the value of the corresponding variable is determined with respect to the maximum and minimum values by proportion to an angular distance between the movable indicator 18, line indicator 19, or the cursor 24 and the maximum and minimum boundaries 14 and 16, respectively, the amount of movement of the cursor 24 and the input device 22 can be minimized.

The value of the corresponding variable can be determined/set in a number of ways. For example, referring to the wedge 12 shown in Figures 2 and 3A, the value may be set based on the angle between the movable indicator 18 and the maximum or minimum boundary 14 or 16. In this case, assume the minimum value of the variable represented by the minimum boundary 16 is 0, the maximum value of the variable represented by the maximum boundary 14 is 90, and the size of the wedge 12 corresponds to 90 degrees of the 360 degree radial control menu 10. Thus, when the movable indicator 18 is moved 5 degrees angularly toward the maximum boundary 14, the value of the corresponding value increases by 5 toward the maximum value. The variable values set by movement of the movable indicators 18 within each wedge 12 may be set between the maximum and minimum values using any increment value subject to restrictions based on size of the menu 10 and arc of the wedges 12, as described below. Although a wedge of 90 degrees is described above as being used to set a variable having a max value of 90, it will be appreciated that other arc angles and/or other maximum values may be used where the ratio of change in variable value to degree of movement is not necessarily one to one. The value of the corresponding variable can be determined/set in a similar manner using other embodiments of the present invention.

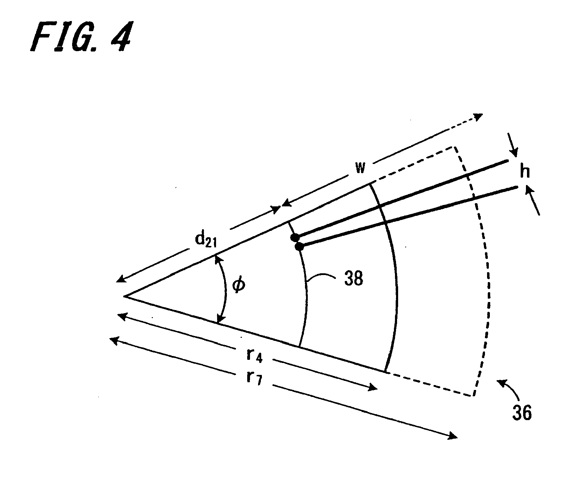

The layout, interaction, and size parameters of an exemplary embodiment of the present invention are now discussed with reference to Figure 4. Figure 4 shows a wedge 36 of a radial control menu, which is not drawn to scale. The sizes and parameters of the embodiment shown in Figure 4 are exemplary and are not intended to limit the scope of the present invention. This description is being provided for explanation and illustration purposes. Generally, two dimensions should be considered when investigating menu size. These dimensions are the diameter of the menu, and the arc subtended by a menu item. Pie menus typically have eight or more items. As will be seen, more than eight items are usually feasible for continuous menus with very large diameters. Menus with the even numbers of four, six, and eight items are considered here. These correspond to angles subtended by each wedge 34 of 90°, 60°, and 45°, respectively.

The smallest target possible is a single pixel. If the range of numbers is 0 to 100 in increments of 5, a total of 21 pixels are needed to achieve each value. Each pixel represents an increment of 5 between 0 and 100. This limit dictates a minimum arc 38 of no less than 21 pixels in length. If an attempt is made to select any given value at a point closer to the origin than this minimum arc 38, not all values will be attainable. The distance from the origin to the arc 38 of 21 pixels is shown as distance d₂₁ in Figure 4. This distance will vary with the angle subtended by the wedge.

The parameters in Figure 4 are as follows:
d₂₁ - The distance from the center of the menu to the arc 38 where every value in a 5% control (the minimum arc 38 is 21 pixels in length) can be selected. Although not shown, d₁₀₁ would be the distance for a 1% control (the minimum arc 38 is 101 pixels in length)
Φ - the angle subtended by the wedge. This is 90° for a menu with 4 items or wedges 36, 60° for a menu with 6 items or wedges 36, or 45° for a menu with 8 items or wedges 36
r₄ - radius of a 4 cm diameter menu
r₇ - radius of a 7 cm diameter menu
w - target width for a single value
h - maximum target height for a single value (the target is one pixel at d₂₁ and gets larger until it reaches h at the maximum radius)

Table 1 details the minimum distances for d₂₁ and d₁₀₁ for various item/wedge angles on a display screen with 100 Dots Per Inch (DPI) resolution.

**Table 1. d₂₁ and d₁₀₁ distances at 100 DPI**

| **Angle** | **Arc of** | |
|---|---|---|
| | d₂₁ | d₁₀₁ |
| 45° | 0.68 cm | 3.27 cm |
| 60° | 0.51 cm | 2.45 cm |
| 90° | 0.34 cm | 1.63 cm |

As can be determined using the above table, a menu item from a 4 cm diameter (2 cm radius) menu with 8 items, i.e., Φ = 45°, would have a target width (w) of 1.32 cm for a 5% resolution control. This would be calculated as follows: d₂₁ for 45° = 0.68. d₂₁ is a function of the resolution of the screen (DPI) and the angle Φ subtended by the wedge. When d₂₁ is subtracted from the radius of the menu, 2 cm - 0.68 cm = 1.32 cm, the target width (w) of 1.32 is obtained. Also using Table 1, the minimum distance for a 101-pixel arc (d₁₀₁), which can achieve a resolution of 1% can be determined to be not less than a 6.54 cm diameter menu with 8 menu items (45° items). The parameters for a 1% resolution are determined in the same manner as the parameters for a 5% resolution.

**Table 2. Target height (h) for 5% resolution at 100 DPI**

| **h in Pixels** | **Menu Diameter** | | | | | | |
|---|---|---|---|---|---|---|---|
| **Angle** | 4 cm | 5 cm | 6 cm | 7 cm | 8 cm | 9 cm | 10 cm |
| 45° | 2.94 | 3.68 | 4.42 | 5.15 | 5.89 | 6.63 | 7.36 |
| 60° | 3.93 | 4.91 | 5.89 | 6.87 | 7.85 | 8.83 | 9.82 |
| 90° | 5.89 | 7.36 | 8.83 | 10.31 | 11.78 | 13.25 | 14.72 |

**Table 3. Target height (h) for 1% resolution at 100 DPI**

| **h in Pixels** | **Menu Diameter** | | | | | | |
|---|---|---|---|---|---|---|---|
| **Angle** | 4 cm | 5 cm | 6 cm | 7 cm | 8 cm | 9 cm | 10 cm |
| 45° | 0.61 | 0.77 | 0.92 | 1.07 | 1.22 | 1.38 | 1.53 |
| 60° | 0.82 | 1.02 | 1.22 | 1.43 | 1.63 | 1.84 | 2.04 |
| 90° | 1.22 | 1.53 | 1.84 | 2.14 | 2.45 | 2.76 | 3.06 |

The width of the target (w) is defined as the menu radius minus d₂₁ or d₁₀₁ for the 5% resolution or the 1% resolution, respectively. The height (h) refers to the amount of radial movement necessary to change the value of the variable. The height at the minimum arc 38 of the target has been defined as one pixel. Next, the height (h) at the other end of the target opposite the minimum arc 38 is considered. Tables 2 and 3 show the largest target height (h), which occurs at the outer circumferential boundary of the wedge 36 opposite the minimum arc 38. Looking at the values in Table 3 that are greater than one pixel, 1% resolution can only be achieved with large diameter menus, or menus with fewer items. Note that with an unbounded menu in which the wedge 36 does not have an outer circumferential boundary, both (w) and (h) can potentially be much larger, limited only by the distance to the edge of the display 32 (see Figure 9). The target height determines the ease with which a target value may be selected using the radial position of a movable indicator, which is not shown in Figure 4. That is, the target height determines the area in which the target value may be selected. It is therefore desirable to have a large height (h) so that it is easier to select the target value for the variable with precision.

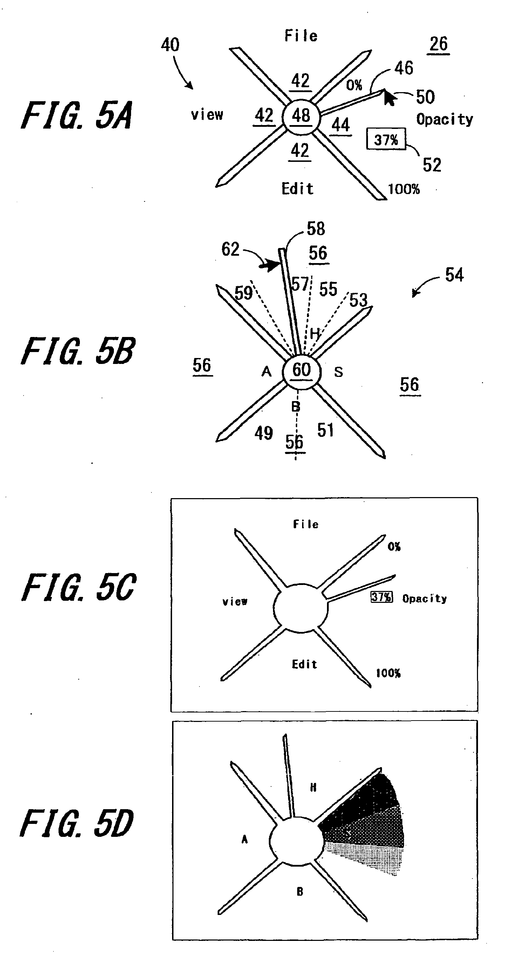

As best shown in Figure 5A, a radial control menu 40 may include wedges 42 that represent functions or toggle (binary state) variables in combination with one or more wedges 44 that represent continuous value variables. The radial control menu 40 shown in Figure 5A is unbounded, meaning the wedges 42 and 44 extend to the edge of the graphical user interface 26. This makes it easy for the user to select the target value, because the target position of a movable indicator 46 is easy to select.

A movable indicator may be a selectable line indicator, a rubber band line, or a path tracer. The movable indicator of the radial control menu 40 is a path tracer 46 drawn from an origin 48 of the radial control menu 40 into the desired wedge 44. The path tracer 46 traces the path followed by a cursor 50 into the desired wedge 44. For example, when the input device 22 (see Figure 9) issues a menu activation command, the radial control menu 40 may be displayed around the cursor 50. The cursor 50 can then be moved into the desired wedge 44, thereby tracing the movement of the cursor 50 in the interface 26, as best shown in Figure 5A. The path tracer 46 need not be straight, because it is the end of the path tracer 46 that determines the location for setting/updating the value of the corresponding variable. Thus, as compared with the embodiment of Figures 2 and 3A, a user need not select and drag the movable indicator 18 (see Figures 2 and 3A), but instead can select a value by simply moving the cursor 50 to the target location.

As an example, the variable "Opacity" may correspond to the wedge 44. A current value indicator 52 may display the current value of the corresponding variable so that a user can ascertain where the variable is currently set between the maximum and minimum values. The current value indicator 52 of the wedge 44 is set to 37%.

As best shown in Figure 5B, a radial control menu 54 has wedges 56 with visual characteristics that represent various values of the corresponding variables to be set using the wedges 56. For example, in wedge B shown in Figure 5B, the darkness/brightness of the coloring varies. Thus, a user can ascertain the effect of moving a movable indicator 58 to a particular location of the wedge 56 prior to actually selecting the target location in the wedge B. Wedge B has a dark side 49 and a bright side 51, which are separated by a dashed line. Although not shown, the bright side 51 and dark side 49 are gradually blended around the dashed line so that the user can select the appropriate brightness value. Wedge H includes areas of various colors 53, 55, 57, and 59 extending from an origin 60 of the radial pie menu 54. Here, one of the various colors can be selected for a color variable by moving a cursor 62 to the appropriate location of the wedge H or by selecting and moving the movable indicator 58 angularly to the appropriate position corresponding to the target value. Thus, while the embodiment of Figure 5B does not show an actual numerical value of the variable or the maximum and minimum values, the radial control menu 54 visually indicates the effect of setting the variable to various locations within the radical control menu 54. The radial control menu 54 shown in Figure 5B may be especially useful in graphic design applications, because a graphic designer can view visual characteristics, such as color, brightness, contrast, etc., prior to making a selection. Figures 5C and 5D correspond to Figures 5A and 5B, respectively, but use shading to illustrate differing visual characteristics. For example, the darker portion of wedge B in Figure 5D corresponds to the dark side 49 of Figure 5B, whereas a brighter portion of wedge B in Figure 5D corresponds to the bright side 51 of Figure 5B. Similarly, different shades in wedge H shown in Figure 5D represent the various colors 53, 55, 57, and 59 of wedge H shown in Figure 5B.

Figures 6A to 6C show alternate embodiments of the present invention. Figure 6A shows a staggered radial control menu 66 having a first plurality of menu items 68 with a wedge shape that is wider closer to an origin 70 of the menu 66 and second plurality of menu items 72 with a wedge shape that is wider farther away from the origin 70 of the menu 66. As best shown in Figure 6A, the first and second menu items 68 and 72 may be arranged in an alternating manner such that the first menu items 66 are wider where the second menu items 68 are not wide, and vice versa. Thus, each of the menu items 68 and 72 has an area that is relatively wide, i.e., a selection area, to enable easy selection by a user. Each of the menu items 68 and 72 have an area that is relatively narrow, i.e., a non-selection area, in which no selection is made. This arrangement allows a much larger number of items for a given menu.

In an embodiment in which a variable can be set using the menu items 68 and 72, the wider areas of these items 68 and 72 may be selection areas used to set corresponding variables. In this case, an angular position within the selection areas can be used to determine the value of the variable. Thus, although not shown in Figure 6A, a movable indicator, such as the movable indicator 18 shown in Figure 2, the line indicator 19 or "rubber band" line shown in Figure 3B, or the path tracer 46 shown in Figure 5A, may be used in the selection areas of the menu items 68 and 72. Additionally, a current value indicator, a maximum value indicator, and a minimum value indicator may also be displayed in association with these selection areas.

As best shown in Figure 6B, a radial control menu 74 has a plurality of wedges 76 densely arranged around an origin 78 of the menu 74. The wedges 76 may each represent graphic design tools, such as an eraser, a brush, a slicer, a cropper, etc.

As best shown in Figure 6C, a radial menu 73 includes at least one fixed item selection wedge 75 in which an item or function can be selected and at least one variable item selection wedge 77 in which the value of a continuous variable can be set. The variable item selection wedge 77 may be any one of the wedges 12, 36, 44, or 56 described in previous embodiments in which the value of the corresponding variable can be set according to the angular position of a cursor, movable indicator, etc. As best shown in Figure 6C, the variable item selection wedge 77 is larger than the fixed item selection wedge 75 so that it is easier for a user to manipulate the value of the variable by movement within the wedge 77. Additionally, because the user can select the item or function associated with the fixed item selection wedge 75 by simply selecting anywhere in the wedge 75, the wedge 75 does not require as much area for a user to be able to effectively select this item.

There are several different types of methods by which wedges, items, or variable values may be selected for the embodiments of Figures 2 through 6C. For simplicity sake, these methods will be described with reference to the radial control menu 10 shown in Figure 2 and the radial control menu 40 shown in Figure 5A. However, it should be understood that these methods or variations on these methods can be used with any of the radial menus and/or wedges shown and described herein.

When a menu activation command is received at the input device 22 (see Figure 9), the graphical user interface 26, which communicates with the input device 22, displays the radial control menu 10 in response to the menu activation command. The radial control menu 10 of Figure 2 is preferably displayed such that the origin 20 of the menu 10 is positioned where the cursor 24 is located in the graphical user interface 26 when the menu is initially displayed. This provides the user immediate access to any one of the wedges 12 with a minimal amount of movement of the input device 22 (see Figure 9).

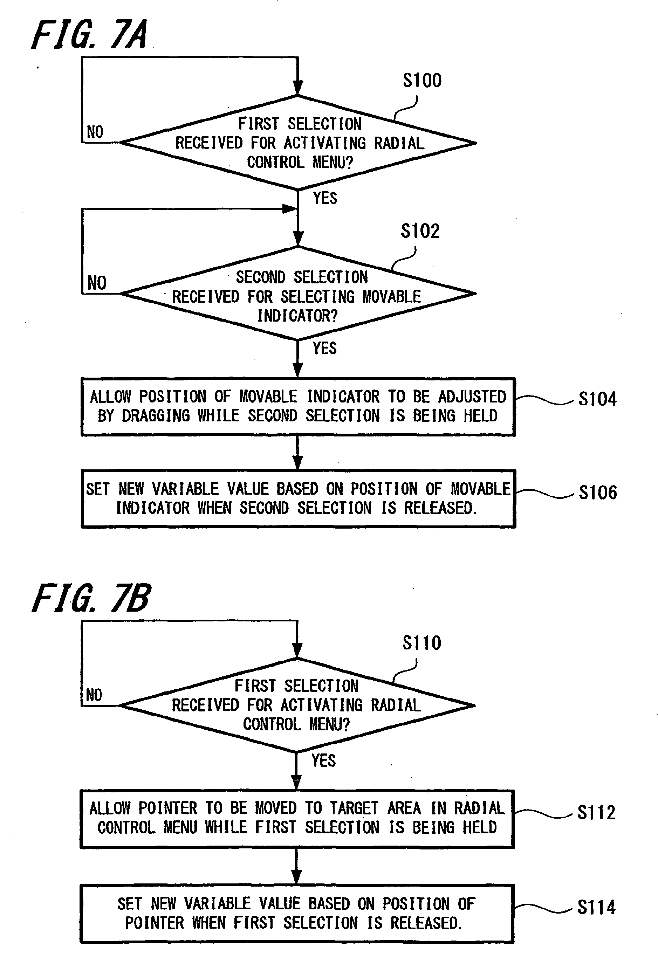

The menu activation command may be assigned to a particular button on the input device 22. For example, the menu activation command may be set to a right or left button on a mouse, a specific key on a keyboard, a button or input of a stylus of a digitizer tablet, or a button located on a digitizer tablet body. As best shown in Figure 7A, a first selection of the assigned button may invoke the menu 10 at step S100, which is shown on the display at step S102, while a second selection of the assigned button may be used to select an item or a value within the wedges 12 and/or select the movable indicator 18 at step S102. In this case, the movable indicator 18 may be dragged while the second selection is being held at step S104 so that the appropriate location within the wedge 12 is selected when the second selection is released at step S106.

A menu item/wedge selection button may be different than the button assigned to activate the menu 10. In this case, the menu 10 may be activated by a first button for issuing the menu activation command, then another button on the input device 22 (see Figure 9) is used to select and/or move the movable indicator 18 by, for example, clicking, dragging, and releasing the movable indicator 18. Thus, the menu 10 can be invoked and a wedge/item can be selected by two button selections (one to invoke the menu 10 and one to select the wedge/item/value).

In another embodiment of the present invention, a single button selection may be used to select a wedge, an item, or a value for a variable using the radial control menu 10. In this case, the button selection invokes the menu and the release of the selection selects the menu item/wedge/value. As best shown in Figure 7B, a menu activation command is received by a first selection at step S 110. Once the menu is shown on the display at step S111, the position of the cursor 24 may be moved to a target area while the first selection is being held at step S 112. Then, when the first selection is released, a new variable value is set based on the position of the cursor 24 at step S114.

Certain types of selections are better suited to certain radial control menus described above. For example, the single button selection may be used with the embodiments of Figures 3B, 3C, 3D, and/or 5A, because the user need not select and move a movable indicator associated with the wedge. Furthermore, the path tracer 46 and the current value indicator 52 shown in Figure 5A or the rubber band line 19 shown in Figures 3B and 3C allow a user to visually perceive the position of the cursor 50 and the value that will be set thereby so that the target value of the variable can be set precisely based on the angular position of where the cursor 50 is located. It is also possible to use a multiple button selection with the embodiments of Figures 3B, 3C, 3D, and/or 5A. For example, a first activation selection can be made to display a radial menu. Then, a value of a variable can be set using a second value setting selection.

The double button selection embodiments described above may be used with the radial control menu 10 shown in Figures 2 and 3A. That is, the radial control menu 10 may be activated by a first selection, and the movable indicator 18 may be selected and/or moved with a second selection.

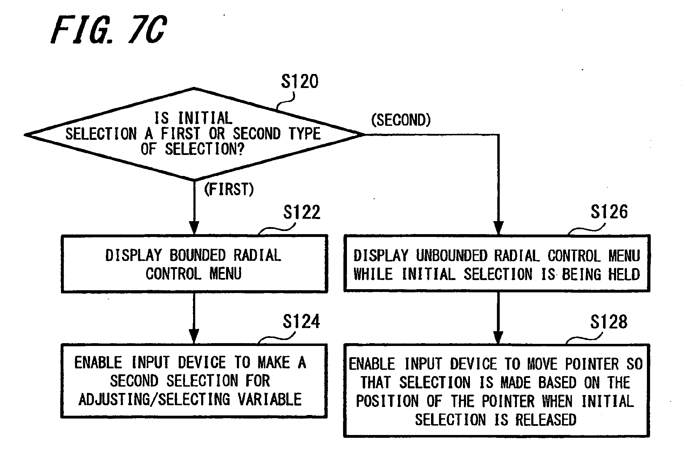

Additionally, the radial control menus described above may be operated in a bounded and unbounded mode giving the user the option of which mode to use as best shown in Figure 7C. In the unbounded mode, the boundaries of each wedge 12 may extend to the edge of the display 32 (see Figure 9). That is, there is no visible circumferential boundary to the radial control menu 10. On the other hand, in the bounded mode, the radial control menu 10 is displayed with the radial circumferential boundary 11 as best shown in Figure 2. At step S120, an initial selection, which is a menu activation command, is received and it is determined whether the initial selection is a first type of selection or a second type of selection. The graphical user interface 26 performs this determination. If the initial selection is the first type of selection, a bounded menu, e.g. the radial control menu 10 shown in Figure 2, is displayed at step S122. At step S124, the input device 22 (see Figure 9) is allowed to make a second selection for adjusting/selecting a variable. Here, the user can move the cursor 24 to the desired wedge 12 and/or location to make the selection using a selection button in the manner described above for the double button selection as best shown in Figure 7A.

On the other hand, if at step S120 it is determined that the initial selection is the second type of selection, the unbounded radial control menu, e.g. the radial control menu 40 shown in Figure 5A, is displayed at step S126. Step S128 then allows the input device 22 to move the cursor 24 to a target area so that the selection made is based on the position of the cursor 50 when the initial selection is released. In this case, the user can move the cursor 50 into the appropriate wedge 44 and/or location and release the menu activation button to select the menu item/wedge where the cursor 50 is currently located. The user may alternatively release the initial selection when the cursor 50 is at the origin 48 to deactivate the menu. Alternatively, the unbounded menu mode may allow for selections to be made in a manner similar to the bounded menu mode using the double button selection.

It should be noted that the first selection type and the second selection type may be the same button or different buttons. When the two are the same buttons, the interface 26 may distinguish the selections based on the length of time the button is pressed, for example, a tap being determined as a first selection type and a hold being determined as a second selection type.

Another way the unbounded and bounded modes can be selected is by using two different buttons. For example, when the input device 22 (see Figure 9) is a mouse, the bounded menu mode may be selected by the left button while the unbounded menu may be selected by the right button. Thus, based on preference, a user can select the bounded menu by left clicking, then select the desired wedge/item/value by left clicking again. Similarly, the user can select the unbounded menu by right clicking and holding, then selecting the desired wedge/item/value by releasing the right click.

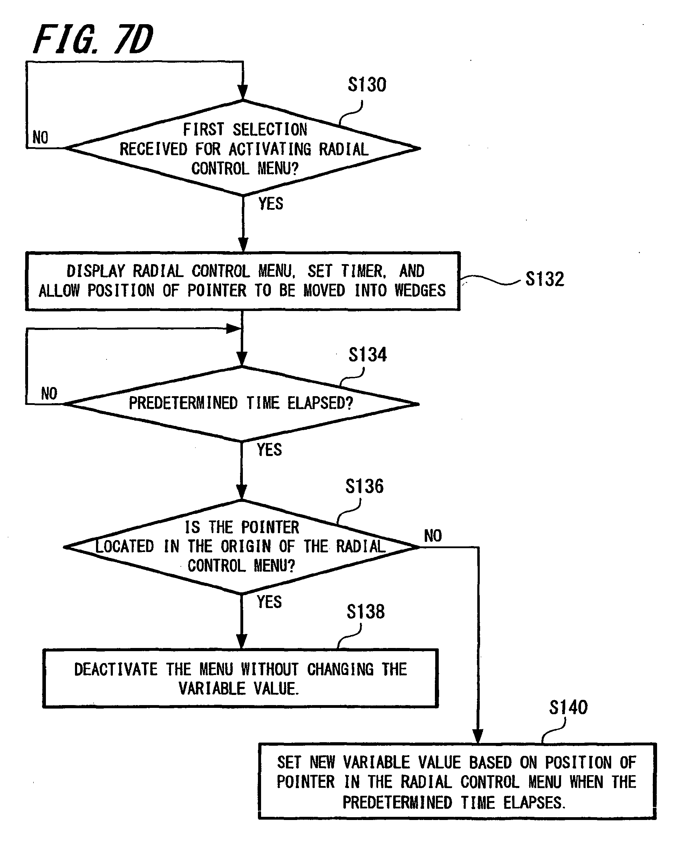

In an alternative embodiment of the present invention referring to Figures 2 and 3A to 3D, once the radial control menu 10 is invoked, the cursor 24 may be moved into the desired wedge 12 and a timing function may automatically select the wedge/item/value when a predetermined time has elapsed as best shown in Figure 7D.

At step S 130, it is determined whether a first selection is received for activating the radial control menu 10. If the menu activation command is received, the radial control menu 10 is displayed, a timer (not shown) is set, and the position cursor 24 is allowed to be moved to the appropriate wedge at step S 132. If the timer determines that the predetermined time has elapsed at step S 134, it is determined whether the cursor 24 is still located at the origin 20 of the menu 10 at step S 136. If the cursor 24 is located in the origin 20, the menu 10 is deactivated without making a selection at step S138. Otherwise, a new variable value is set based on the position of the position cursor 24 in the radial control menu 10 at step S 140.

Because the menu 10 is displayed such that the origin 20 is positioned where the cursor 24 is located thereby allowing for a quick selection, the predetermined time may be set to be short, for example, 1 second or less. The predetermined time may be adjustable by a user to meet a particular user's needs. For example, if the user is new to the radial control menu 10, the predetermined time may be set longer, while an experienced user that does not need to study the radial control menu 10 to make a selection may want a short predetermined time. Should the predetermined time elapse without the user having moved the cursor 24 into the wedge/item 12 to be selected, the radial control menu 10 would be deactivated so that the user can continue working or reactivate the menu 10 when ready to make a selection.

In an alternative embodiment of the present invention, an activation button may be held for displaying the menu 10 while the input device 22 (see Figure 9) is used to select or adjust the items/wedges. In this case, the menu 10 is deactivated when the activation button is released regardless of the position of the cursor 24 and regardless of whether a selection or adjustment has been made.

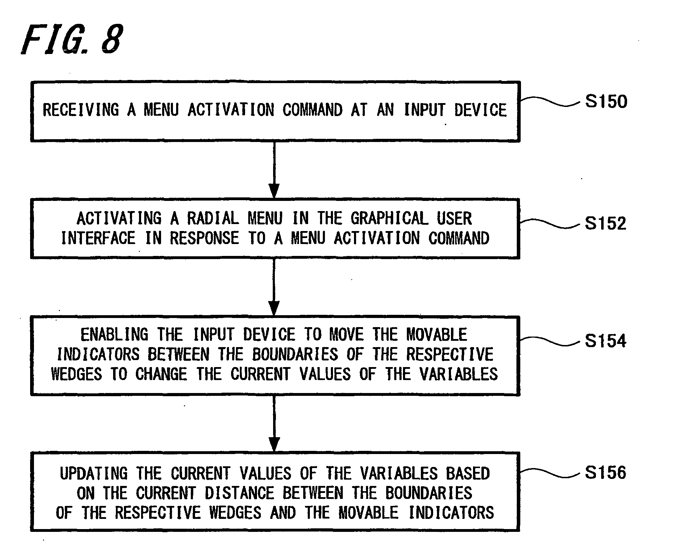

Figure 8 shows a method of controlling variables using a radial control menu according to another embodiment of the present invention. The method of Figure 8 may be performed using the radial control menu 10 shown in Figure 2. Thus, for explanation purposes, the method of Figure 8 will be described with reference to Figure 2. It should be understood, however, that the method shown in Figure 8 can be applied to the radial menus of any of the embodiments described herein. In this case, the movable indicator(s) in steps S 151 to S 154 (described below) may refer to a cursor, a selectable movable indicator, a path tracing element, or a rubber band line.

In step S 150, a menu activation command is received at the input device 22. In response to the menu activation command received by the input device 22, the radial control menu 10 is activated in the graphical user interface 26 at step S 152. The activation of the radial control menu 10 performed at step S152 includes retrieving current variable settings for the wedges 12 in the radial control menu 10 and displaying each wedge 12 including its own movable indicator 18. Then, in step S 154, the graphical user interface 26 enables the input device 22 (see Figure 9) to move the movable indicator(s) 18 between the boundaries 14 and 16 of the respective wedge(s) 12 to change the current values of the variables. Once the movable indicator(s) 18 is moved, the current values of the variables are updated based on the current distance between the boundaries 14 and 16 of the respective wedge(s) 12 and the movable indicator(s) 18 in step S 156.

As best shown in Figure 9, a system 80 allows variables to be controlled using a radial control menu. For simplicity sake, the system 80 of Figure 9 will be described with reference to the radial control menu 10 of Figure 2. However, it should be understood that the system 80 may be used with any of the above-described radial control menus and other variations thereof in a similar manner.

The system 80 includes the display 32 which interacts with the graphical user interface 26 so that the user can manipulate the graphics on the display 32. The graphical user interface 26 runs on a processing unit 82 to display the radial control menu 10. The system 80 further includes the input device 22 to enable a user to interact with the graphical user interface 26. The processing unit 82 includes a value storage unit 84 for storing current values of at least one variable. The processing unit 82 also includes an indicator position unit 86 for determining the position of the movable indicator(s) 18 in the respective wedges 12 of the radial control menu 10.

Thus, when the input device 22 moves the movable indicator(s) 18 in radial control menu 10, the indicator position unit 86 determines the new, updated value of the variable based on the new position of the movable indicator(s) 18 within the wedge 12. For example, the indicator position unit 86 may determine the new variable value based on the angular position of the movable indicator(s) 18 with respect to the boundaries 14 and 16 of the wedge 12. To this end, the indicator position unit 86 may include a storage unit (not shown), such as a lookup table, that stores a plurality of angular positions in one to one correspondence with variable values. Once the indicator position unit 86 determines the current, updated value of the variable, the indicator position unit 86 provides this value to the value storage unit 84 for storage.

When the radial control menu 10 is subsequently activated, the indicator position unit 86 retrieves the current variable value stored in the value storage unit 84 and determines the appropriate position of the movable indicator(s) 18 within the respective wedge(s) 12. Accordingly, the radial control menu 10 is displayed by the graphical user interface 26 with the movable indicator(s) 18 positioned appropriately within the wedge(s) 12. The graphical user interface 26 runs on the processing unit 82 to allow a user to interact with the display 32 using the input device 22. The graphical user interface 26 accesses the value storage unit 84 and the indicator position unit 86 to allow the user to manipulate the radial control menu 10. Although the indicator position unit 86 is shown as being separate from the graphical user interface 26, it should be understood that the graphical user interface 26 may alternatively include the functionality of the indicator position unit 86.

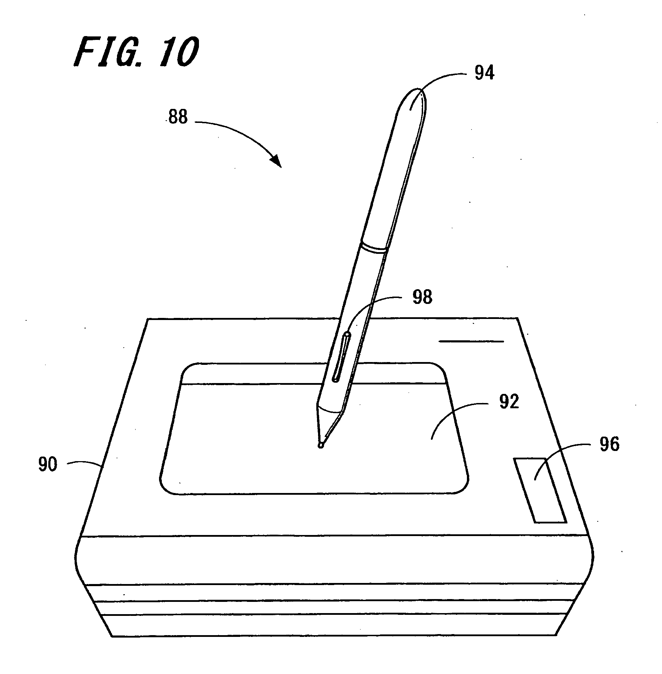

As best shown in Figure 10, a digitizer tablet 88 may be used as the input device 22 shown in Figure 9. The digitizer tablet 88 includes a tablet housing 90, a position detecting surface 92 defined by the tablet housing 90, and a pointing device 94 for interacting with the position detecting surface 92 so that the position of the pointing device 94 is detected by the digitizer tablet 88. The pointing device 94 may be a stylus, a mouse, a puck, or the like. The tablet housing 90 includes a button 96, which may be used to activate the radial menu(s) described above. Alternatively, a button 98 on the pointing device 94 may be used to activate the radial menu(s). In some embodiments, the button 96 on the tablet housing 90 is used to activate the radial menu, and the button 98 on the pointing device 94 is used to make a selection in the radial menu. The pointing device 94 can be used on the position detecting surface 92 to move the cursor 24 in the wedge 12 of the radial control menu 10 (see Figure 2). Accordingly, setting values and/or selecting of menu items in the radial control menu 10 are performed efficiently and conveniently.

It will be appreciated by one of ordinary skill in the art that the apparatus and methods of the various embodiments of the present invention, for example, the methods of Figures 7A to 8, the processing unit 82 of Figure 9 or the graphical user interface 26, can be implemented as software or computer readable recording medium running on a host application. The computer readable recording medium may be any data storage device that can store data which can be thereafter read by a computer system. Examples of the computer readable recording medium include read-only memory (ROM), random-access memory (RAM), CD-ROMs, flash memory, downloadable instructions, magnetic tapes, floppy disks, optical data storage devices, and carrier waves (such as data transmission through the Internet), among other things.

Although embodiments of the present invention have been shown and described, it will be appreciated by those skilled in the art that changes may be made in these embodiments without departing from the principles of the invention, the scope of which is defined in the appended claims.

## Claims

1. A computer system configured to display a graphical user interface (26) for displaying actions of an input device on a display, said graphical user interface (26) comprising:
a radial menu comprising:
an origin (20) disposed at the center of said radial menu, and
at least a first wedge (12) defining an area extending outwardly from said origin (20), said first wedge (12) associated with a variable that is capable of being set to a value between a predetermined minimum value and a predetermined maximum value; and
a cursor (24) for indicating a current position of the input device on the display,
**characterized in that**
said radial menu further comprises at least a first variable adjuster disposed in said first wedge (12), said first variable adjuster being angularly movable by said cursor (24) about said origin (20) within said first wedge (12) to select the current value of the variable based upon the angular position of said first variable adjuster within said first wedge (12),
wherein said first variable adjuster comprises a movable line (18, 19) extending from said origin (20) of said radial menu, said movable line (18, 19) having a first end nearest to said origin (20) and a second end farthest from said origin (20), said second end corresponding to a position of said cursor (24) so that movement of the cursor changes angular position and/or length of said movable line (18, 19).

2. Computer system according to claim 1, wherein said first wedge (12) includes a current value indicator, wherein said current value indicator is displayed in response to said cursor (24) entering or moving within an area bounded by said wedge (12).

3. Computer system according to claim 1 or 2, wherein said first wedge (12) comprises:
a minimum boundary (16) defining a first radial boundary of said first wedge (12), said minimum boundary (16) representing the predetermined minimum value of the variable; and
a maximum boundary (14) opposite the minimum boundary, said maximum boundary (14) defining a second radial boundary of said first wedge and representing the predetermined maximum value of the variable,
wherein said cursor (24) is angularly movable between said maximum and minimum boundaries (14, 16) to adjust the current value of the variable.

4. Computer system according to claim 1, wherein said first variable adjuster comprises a path tracer drawn to follow a path of said cursor into said first wedge (12).

5. Computer system according to one of the preceding claims, wherein said radial menu is activated in a bounded mode in which said first wedge (12) has an outer boundary opposite to an origin (20) of said radial menu when a first input is received, and said radial menu is activated in an unbounded mode in which said first wedge (12) has no defined outer boundary opposite to the origin (20) of said radial menu when a second input is received, the second input being different from the first input.

6. Computer system according to one of the preceding claims, wherein said first wedge (12) comprises a non-selection area and a selection area, said selection area having a wider arc length.

7. Computer system according to one of the preceding claims, said menu comprising:
at least one wedge representing a control variable, said wedge having a maximum radial boundary (14) representing a predetermined maximum value for the control variable and a minimum radial boundary (16) representing a predetermined minimum value for the control variable, said radial boundaries (14, 16) extending outwardly from an origin (20) of the menu;
at least one movable line indicator (19) extending from the origin (20) of the menu into said wedge, said line indicator having an adjustable angular position for selecting a value for said control variable between the predetermined maximum and minimum values, the value selected for the control variable being determined with respect to the predetermined maximum and minimum values by proportion to an angular distance between said line indicator and said maximum and minimum radial boundaries (14, 16), respectively.

8. A method of controlling and/or displaying a value of at least one variable capable of being set to a value between a predetermined minimum value and a predetermined maximum value using an input device operably associated with a graphical user interface (26) having a cursor (24) indicating a current position of the input device, the method comprising the steps of:
activating a radial menu in the graphical user interface (26) in response to a menu activation command, the radial menu having an origin (20) and at least a first wedge (12) associated with the variable extending from the origin (20) so that the cursor is movable inside the first wedge (12) to select a current value for the variable based on the angular position of the cursor (24) about the origin, said radial menu further comprises at least a first variable adjuster disposed in said first wedge (12), said first variable adjuster being angularly movable by said cursor (24) about said origin (20) within said first wedge (12) to select the current value of the variable based upon the angular position of said first variable adjuster within said first wedge (12), wherein said first variable adjuster comprises a movable line (18, 19) extending from said origin (20) of said radial menu, said movable line (18, 19) having a first end nearest to said origin (20) and a second end farthest from said origin (20), said second end corresponding to a position of said cursor (24),
**characterized by**
receiving a movement command via the input device, the movement command moving the cursor (24) within the first wedge (12), wherein the movement of the cursor (24) changes the angular position and/or length of said movable line (18, 19); and
changing the current value of the variable to reflect the changed angular position of said movable line (18, 19) by the movement of the cursor (24) about the origin (20) and displaying the current value of the variable.

9. Method according to claim 8, wherein:
the activation of the radial menu, the reception of the movement command, and the changing of the current value are performed by a double button selection of at least one button associated with the input device, a first button selection causing the radial menu to be displayed and a second button selection causing selection and/or movement of the first variable adjuster.

10. Method according to claim 8 or 9, wherein the radial control menu is associated with an input device having at least one button associated therewith and a display having a cursor (24), the method comprising:
receiving a first selection of the at least one button on the input device;
displaying the radial control menu on the display in response to the first selection, the radial control menu having an origin (20) at a center thereof and at least one wedge (12) extending from the origin, the radial control menu being displayed such that the origin (20) thereof corresponds to a position of the cursor on the display;
moving the input device to move the cursor (24) into the at least one wedge (12);
determining a current value of the variable based on an angular position of the cursor (24) with respect to the origin (20) and displaying the current value of the variable about the at least one wedge (12); and
receiving a second selection of the at least one button to set the value that is currently displayed as the value of the variable.

11. Method according to one of the claims 8 to 10, wherein the input device comprises a digitizer tablet having at least one first button and an associated pointing device having at least one second button, and the first selection comprises selecting the at least one first button on the digitizer tablet, and the second selection comprises selecting the at least one second button on the pointing device.

12. Method according to claim 10, wherein if, prior to the second selection, the cursor is moved out of the at least one wedge, the current value of the variable is removed from the display in response thereto.

13. A computer readable medium containing executable code to perform a method according to one of the claims 8 to 12 of controlling and/or displaying a value of at least one variable capable of being set to a value between a predetermined minimum value and a predetermined maximum value using an input device operably associated with a graphical user interface (26).

## Patentansprüche

1. Computersystem, welches ausgebildet ist zum Anzeigen einer graphischen Nutzerschnittstelle (26) zum Anzeigen von Handlungen eines Eingabegerätes auf einer Anzeige, wobei die graphische Nutzerschnittstelle (26) folgendes aufweist:
ein radiales Menü mit:
einem Ursprung (20), der an einem Mittelpunkt des radialen Menüs angeordnet ist, und
zumindest einem ersten Keilabschnitt (12), der ein Gebiet definiert, welches sich nach außen von dem Ursprung (20) erstreckt, wobei der erste Keilabschnitt (12) zu einer Variable gehört, die auf einen Wert gesetzt werden kann zwischen einem vorbestimmten Minimalwert und einem vorbestimmten Maximalwert; und
einen Cursor (24) zum Anzeigen einer gegenwärtigen Position des Eingabegerätes auf der Anzeige,
**dadurch gekennzeichnet, dass**
das radiale Menü ferner zumindest eine erste Variablen-Einstelleinrichtung aufweist, die in dem ersten Keilabschnitt (12) angeordnet ist, wobei die erste Variablen-Einstelleinrichtung bezüglich eines Winkels durch den Cursor (24) um den Ursprung herum (20) innerhalb des ersten Keilabschnittes (12) bewegbar ist, um den gegenwärtigen Wert der Variable basierend auf der Winkelposition der zumindest einen Variablen-Einstelleinrichtung innerhalb des ersten Keilabschnittes (12) auszuwählen,
wobei die erste Variablen-Einstellrichtung eine bewegbare Linie (18, 19) aufweist, die von dem Ursprung (20) des radialen Menüs sich erstreckt, wobei die bewegbare Linie (18, 19) ein erstes Ende, welches sich am Nahesten zum Ursprung (20) befindet, und ein zweites Ende, welches sich am Weitesten weg von dem Ursprung (20) befindet, aufweist, wobei das zweite Ende einer Position des Cursors (24) entspricht, so dass eine Bewegung des Cursors eine Winkelposition und/oder eine Länge der bewegbaren Linie (18, 19) ändert.

2. Computersystem nach Anspruch 1, wobei der erste Keilabschnitt (22) einen Anzeiger für den gegenwärtigen Wert aufweist, wobei der Anzeiger für den gegenwärtigen Wert angezeigt wird in Antwort darauf, dass der Cursor (24) in ein Gebiet, welches durch den Keilabschnitt (12) begrenzt wird, sich hineinbewegt oder sich innerhalb des Gebietes bewegt.

3. Computersystem nach Anspruch 1 oder 2, wobei der erste Keilabschnitt folgendes aufweist:
eine Minimalgrenze (16), die durch eine erste radiale Grenze des ersten Keilabschnittes (12) definiert wird, wobei die Minimalgrenze (16) den vorbestimmten Minimalwert der Variable darstellt; und
eine Maximalgrenze (14), die gegenüberliegend zu der Minimalgrenze ist, wobei die Maximalgrenze (14) einen zweiten radialen Rand des ersten Keilabschnittes definiert und den vorbestimmten Maximalwert der Variable darstellt,
wobei der Cursor (24) bezüglich eines Winkels bewegbar ist zwischen der maximalen und der minimalen Grenze (14, 16), um den gegenwärtigen Wert der Variable zu ändern.

4. Computersystem nach Anspruch 1, wobei die erste Variablen-Einstelleinrichtung einen Pfadnachverfolger aufweist, der durch ein Folgen eines Pfades des Cursors innerhalb des ersten Keilabschnittes gezeichnet wird (12).

5. Computersystem nach einem der vorhergehenden Ansprüche, wobei das radiale Menü aktiviert wird in einem begrenzten Modus, in welchen der erste Keilabschnitt (12) eine äußere Grenze hat, die gegenüberliegend zu dem Ursprung (20) des radialen Menüs ist, wenn eine erste Eingabe empfangen wird, und das radiale Menü aktiviert wird in einem unbegrenzten Modus, in welchem der erste Keilabschnitt (12) keine definierte äußere Grenze gegenüberliegend zu dem Ursprung (20) des radialen Menüs hat, wenn eine zweite Eingabe empfangen wird, wobei die zweite Eingabe unterschiedlich ist von der ersten Eingabe.

6. Computersystem nach einem der vorhergehenden Ansprüche, wobei der erste Keilabschnitt (12) einen nicht auswählbaren Bereich und einen auswählbaren Bereich aufweist, wobei der auswählbare Bereich eine größere Bogenlänge hat.

7. Computersystem nach einem der vorhergehenden Ansprüche, wobei das Menü folgendes aufweist:
zumindest einen Keilabschnitt, der eine Steuervariable darstellt, wobei der Keilabschnitt eine maximale radiale Grenze (14) aufweist, die einen vorbestimmten Maximalwert der Steuervariable darstellt und eine minimale radiale Grenze (16) aufweist, die einen vorbestimmten Minimalwert der Steuervariable darstellt, wobei die radialen Grenzen (14, 16) sich nach außen von dem Ursprung (20) des Menüs aus erstrecken;
zumindest einen bewegbaren Linienindikator (19), der von dem Ursprung (20) des Menüs sich in den Keilabschnitt erstreckt, wobei der Linienindikator eine einstellbare Winkelposition aufweist zum Selektieren eines Wertes einer Steuervariable zwischen den vorbestimmten Maximal- und Minimalwerten, wobei der Wert, der für die Steuervariable ausgewählt wird, bestimmt wird in Bezug auf den vorbestimmten Maximal- und Minimalwerten durch ein Anteil einer Winkelentfernung zwischen dem Linienindikator und der maximalen und der minimalen radialen Grenzen (14, 16).

8. Verfahren zum Steuern und/oder Darstellen eines Wertes von zumindest einer Variable, die gesetzt werden kann auf einen Wert zwischen einem vorbestimmten Minimalwert und einem vorbestimmten Maximalwert unter Nutzung eines Eingabegerätes, welches operativ zu einer graphischen Nutzerschnittstelle (26) gehört, die einen Cursor (24) aufweist zum Anzeigen einer gegenwärtigen Position des Eingabegeräts, wobei das Verfahren folgende Schritte aufweist:
Aktivieren eines radialen Menüs in der graphischen Nutzerschnittstelle (26) in Antwort auf einen Menüaktivierungsbefehl, wobei das radiale Menü einen Ursprung (20) aufweist und zumindest einen ersten Keilabschnitt (12), der zu der Variable gehört und sich von dem Ursprung (20) aus erstreckt, so dass der Cursor innerhalb des ersten Keilabschnittes (12) bewegbar ist zum Selektieren eines gegenwärtigen Wertes der Variable basierend auf der Winkelposition des Cursors (20) um den Ursprung herum, wobei das radiale Menü weiter zumindest eine erste Variablen-Einstelleinrichtung aufweist, die in dem ersten Keilabschnitt (12) angeordnet ist, wobei die erste Variablen-Einstelleinrichtung winkelmäßig bewegbar ist durch den Cursor (24) um den Ursprung (20) herum innerhalb des ersten Keilabschnittes (12), um den gegenwärtigen Wert der Variable basierend auf der Winkelposition der ersten Variablen-Einstelleinrichtung zu selektieren, und zwar innerhalb des ersten Keilabschnittes (12), wobei die erste Variablen-Einstelleinrichtung eine bewegbare Linie (18, 19) aufweist, die von dem Ursprung (20) des radialen Menüs sich erstreckt, wobei die bewegbare Linie (18, 19) ein erstes Ende, welches sich am Nahesten zu dem Ursprung (20) befindet, und ein zweites Ende, welches sich am Weitesten weg von dem Ursprung (20) befindet, aufweist, wobei das zweite Ende einer Position des Cursors (24) entspricht,
**gekennzeichnet durch**
Empfangen eines Bewegungsbefehls über das Eingabegerät, wobei der Bewegungsbefehl den Cursor (24) innerhalb des ersten Keilabschnitts (12) bewegt, wobei die Bewegung des Cursors (24) die Winkelposition und/oder Länge der bewegbaren Linie (18, 19) ändert, und
Ändern des gegenwärtigen Wertes der Variable, um die geänderte Winkelposition der bewegbaren Linie (18, 19) **durch** die Bewegung des Cursors (24) um den Ursprung (20) herum darzustellen und den gegenwärtigen Wert der Variable anzuzeigen.

9. Verfahren nach Anspruch 8, wobei
die Aktivierung des radialen Menüs, der Empfang des Bewegungskommandos und das Ändern des gegenwärtigen Wertes durch eine Doppeltastenauswahl von zumindest einer Taste, die zu dem Eingabegerät gehört, ausgeführt werden, wobei eine erste Tastenauswahl bewirkt, dass das radiale Menü angezeigt wird und eine zweite Tastenauswahl bewirkt, dass die erste Variablen-Einstelleinrichtung ausgewählt und/oder bewegt wird.

10. Verfahren nach Anspruch 8 oder 9, wobei das radiale Steuermenü zu einem Eingabegerät gehört, welches zumindest eine Taste aufweist, die dazu gehörig ist und eine Anzeige aufweist, die den Cursor (24) aufweist, wobei das Verfahren folgendes umfasst:
Empfangen einer ersten Auswahl von zumindest einer Taste des Eingabegerätes;
Darstellen des radialen Menüs auf der Anzeige in Antwort auf die erste Auswahl, wobei das radiale Steuermenü einen Ursprung (20) an einem Zentrum davon aufweist und zumindest einen Keilabschnitt (12) aufweist, der von dem Ursprung sich erstreckt, wobei das radiale Menü dargestellt wird, so dass der Ursprung (20) davon einer Position des Cursors auf der Anzeige entspricht;
Bewegen des Eingabegeräts, um den Cursor (24) in zumindest einem Keilabschnitt (12) zu bewegen;
Bestimmen eines gegenwärtigen Wertes der Variable basierend auf einer Winkelposition des Cursors (24) in Bezug auf den Ursprung (20) und Darstellen des gegenwärtigen Wertes der Variable in Bezug auf den zumindest einen Winkelabschnitt (12); und
Empfangen einer zweiten Auswahl der zumindest einen Taste zum Setzen des Wertes, der gegenwärtig dargestellt wird als den Wert der Variable.

11. Verfahren nach einem der Ansprüche 8 bis 10, wobei das Eingabegerät einen Digitalisierer-Tablet aufweist mit zumindest einer ersten Taste und einem dazugehörigen Anzeigegerät mit zumindest einer zweiten Taste, wobei die erste Auswahl ein Auswählen der zumindest ersten Taste des Digitalisierer-Tablets umfasst und die zweite Auswahl ein Selektieren der zumindest einen zweiten Taste des Zeigergerätes umfasst.

12. Verfahren nach Anspruch 10, wobei, wenn vor der zweiten Auswahl, der Cursor aus dem zumindest einen Keilabschnitt bewegt wird, in Antwort darauf der gegenwärtige Wert der Variable gelöscht wird von der Anzeige.

13. Computerlesbares Medium mit ausführbarem Code, um ein Verfahren nach einem der Ansprüche 8 bis 12 auszuführen für eine Steuerung und/oder Darstellung eines Wertes von zumindest einer Variable, die gesetzt werden kann auf einen Wert zwischen einem vorbestimmten Minimalwert und einem vorbestimmen Maximalwert unter Nutzung eines Eingabegerätes, welches operativ zu einer graphischen Nutzerschnittstelle (26) gehört.

## Revendications

1. Système informatique configuré de manière à afficher une interface utilisateur graphique (26) destinée à afficher des actions d'un dispositif d'entrée sur un affichage, ladite interface utilisateur graphique (26), comprenant :
un menu radial comprenant :
un point d'origine (20) disposé au centre dudit menu radial ; et
au moins un premier coin (12) définissant une zone s'étendant vers l'extérieur à partir dudit point d'origine (20), ledit premier coin (12) étant associé à une variable qui peut être définie sur une valeur comprise entre une valeur minimale prédéterminée et une valeur maximale prédéterminée ; et
un curseur (24) destiné à indiquer une position en cours du dispositif d'entrée sur l'affichage,
**caractérisé en ce que**
ledit menu radial comprend en outre au moins un premier module de réglage de variable disposé dans ledit premier coin (12), ledit premier module de réglage de variable étant déplaçable angulairement par ledit curseur (24) autour dudit point d'origine (20) au sein dudit premier coin (12), en vue de sélectionner la valeur en cours de la variable sur la base de la position angulaire dudit premier module de réglage de variable au sein dudit premier coin (12),
dans lequel ledit premier module de réglage de variable comprend une ligne mobile (18, 19) s'étendant à partir dudit point d'origine (20) dudit menu radial, ladite ligne mobile (18, 19) présentant une première extrémité la plus proche dudit point d'origine (20) et une seconde extrémité la plus éloignée dudit point d'origine (20), ladite seconde extrémité correspondant à une position dudit curseur (24) de sorte que le mouvement du curseur modifie la position angulaire et/ou la longueur de ladite ligne mobile (18, 19).

2. Système informatique selon la revendication 1, dans lequel ledit premier coin (12) inclut un indicateur de valeur en cours, dans lequel ledit indicateur de valeur en cours est affiché en réponse à l'entrée ou au déplacement dudit curseur (24) dans une zone délimitée par ledit coin (12).

3. Système informatique selon la revendication 1 ou 2, dans lequel ledit premier coin (12) comprend :
une limite minimale (16) définissant une première limite radiale dudit premier coin (12), ladite limite minimale (16) représentant la valeur minimale prédéterminée de la variable ; et
une limite maximale (14) opposée à la limite minimale, ladite limite maximale (14) définissant une seconde limite radiale dudit premier coin et représentant la valeur maximale prédéterminée de la variable ;
dans lequel ledit curseur (24) est déplaçable angulairement entre lesdites limites maximales et minimales (14, 16) en vue d'ajuster la valeur en cours de la variable.

4. Système informatique selon la revendication 1, dans lequel ledit premier module de réglage de variable comprend un traceur de chemin dessiné de manière à suivre un chemin dudit curseur au sein dudit premier coin (12).

5. Système informatique selon l'une quelconque des revendications précédentes, dans lequel ledit menu radial est activé dans un mode délimité dans lequel ledit premier coin (12) présente une limite extérieure opposée à un point d'origine (20) dudit menu radial lorsqu'une première entrée est reçue, et ledit menu radial est activé dans un mode non délimité dans lequel ledit premier coin (12) n'a aucune limite extérieure définie opposée au point d'origine (20) dudit menu radial lorsqu'une seconde entrée est reçue, la seconde entrée étant différente de la première entrée.

6. Système informatique selon l'une quelconque des revendications précédentes, dans lequel ledit premier coin (12) comprend une zone de non-sélection et une zone de sélection, ladite zone de sélection présentant une longueur d'arc plus étendue.

7. Système informatique selon l'une quelconque des revendications précédentes, dans lequel ledit menu comporte :
au moins un coin représentant une variable de commande, ledit coin présentant une limite radiale maximale (14) représentant une valeur maximale prédéterminée pour la variable de commande, et une limite radiale minimale (16) représentant une valeur minimale prédéterminée pour la variable de commande, lesdites limites radiales (14, 16) s'étendant vers l'extérieur à partir d'un point d'origine (20) du menu ;
au moins un indicateur de ligne mobile (19) s'étendant à partir du point d'origine (20) du menu au sein dudit coin, ledit indicateur de ligne présentant une position angulaire ajustable pour sélectionner une valeur de ladite variable de commande comprise entre les valeurs maximales et minimales prédéterminées, la valeur sélectionnée pour la variable de commande étant déterminée relativement aux valeurs maximales et minimales prédéterminées en proportion d'une distance angulaire entre ledit indicateur de ligne et lesdites limites radiales maximales et minimales (14, 16), respectivement.

8. Procédé de commande et/ou d'affichage d'une valeur d'au moins une variable pouvant être définie sur une valeur comprise entre une valeur minimale prédéterminée et une valeur maximale prédéterminée, au moyen d'un dispositif d'entrée associé de manière fonctionnelle à une interface utilisateur graphique (26) présentant un curseur (24) indiquant une position en cours du dispositif d'entrée, le procédé comprenant les étapes ci-dessous consistant à :
activer un menu radial dans l'interface utilisateur graphique (26) en réponse à une commande d'activation de menu, le menu radial présentant un point d'origine (20) et au moins un premier coin (12) associé à la variable s'étendant à partir du point d'origine (20) de sorte que le curseur est déplaçable à l'intérieur du premier coin (12) en vue de sélectionner une valeur en cours pour la variable sur la base de la position angulaire du curseur (24) autour du point d'origine, ledit menu radial comportant en outre au moins un premier module de réglage de variable disposé au sein dudit premier coin (12), ledit premier module de réglage de variable étant angulairement déplaçable par ledit curseur (24) autour dudit point d'origine (20) au sein dudit premier coin (12), en vue de sélectionner la valeur en cours de la variable sur la base de la position angulaire dudit premier module de réglage de variable au sein dudit premier coin (12), dans lequel ledit premier module de réglage de variable comporte une ligne mobile (18, 19) s'étendant à partir dudit point d'origine (20) dudit menu radial, ladite ligne mobile (18, 19) présentant une première extrémité la plus proche dudit point d'origine (20) et une seconde extrémité la plus éloignée dudit point d'origine (20), ladite seconde extrémité correspondant à une position dudit curseur (24) ;
**caractérisé par** les étapes ci-dessous consistant à :
recevoir une commande de déplacement par le biais du dispositif d'entrée, la commande de déplacement déplaçant le curseur (24) au sein du premier coin (12), dans lequel le déplacement du curseur (24) modifie la position angulaire et/ou la longueur de ladite ligne mobile (18, 19) ; et
modifier la valeur en cours de la variable en vue de refléter la position angulaire modifiée de ladite ligne mobile (18, 19) par le déplacement du curseur (24) autour du point d'origine (20), et afficher la valeur en cours de la variable.

9. Procédé selon la revendication 8, dans lequel :
l'activation du menu radial, la réception de la commande de déplacement, et la modification de la valeur en cours sont mises en oeuvre par une double sélection de bouton d'au moins un bouton associé au dispositif d'entrée, une première sélection de bouton occasionnant l'affichage du menu radial, et une seconde sélection de bouton occasionnant la sélection et/ou le déplacement du premier module de réglage de variable.

10. Procédé selon la revendication 8 ou 9, dans lequel le menu de commande radiale est associé à un dispositif d'entrée présentant au moins un bouton qui lui est associé et un affichage présentant un curseur (24), le procédé consistant à :
recevoir une première sélection dudit au moins un bouton sur le dispositif d'entrée ;
afficher le menu de commande radiale sur l'affichage en réponse à la première sélection, le menu de commande radiale présentant un point d'origine (20) au niveau d'un centre de celui-ci, et au moins un coin (12) s'étendant à partir du point d'origine, le menu de commande radiale étant affiché de sorte que le point d'origine (20) de celui-ci correspond à une position du curseur sur l'affichage ;
déplacer le dispositif d'entrée en vue de déplacer le curseur (24) au sein dudit au moins un coin (12) ;
déterminer une valeur en cours de la variable sur la base d'une position angulaire du curseur (24) relativement au point d'origine (20), et afficher la valeur en cours de la variable autour dudit au moins un coin (12) ; et
recevoir une seconde sélection dudit au moins un bouton en vue de définir la valeur affichée en cours en tant que la valeur de la variable.

11. Procédé selon l'une quelconque des revendications 8 à 10, dans lequel le dispositif d'entrée comprend une tablette de numérisation présentant au moins un premier bouton et un dispositif de pointage associé présentant au moins un second bouton, dans lequel la première sélection consiste à sélectionner ledit au moins un premier bouton sur la tablette de numérisation, et la seconde sélection consiste à sélectionner ledit au moins un second bouton sur le dispositif de pointage.

12. Procédé selon la revendication 10, dans lequel, si, préalablement à la seconde sélection, le curseur est déplacé en dehors dudit au moins un coin, la valeur en cours de la variable est supprimée de l'affichage en réponse à cela.

13. Support lisible par ordinateur contenant un code exécutable destiné à mettre en oeuvre un procédé, selon l'une quelconque des revendications 8 à 12, de commande et/ou d'affichage d'une valeur d'au moins une variable pouvant être définie sur une valeur comprise entre une valeur minimale prédéterminée et une valeur maximale prédéterminée, au moyen d'un dispositif d'entrée associé de manière fonctionnelle à une interface utilisateur graphique (26).
